# EUROPEAN PATENT SPECIFICATION

(11) **EP 0 938 367 B1**
(45) Date of publication and mention of the grant of the patent: **21.01.2004**
(21) Application number: 97942301.9
(22) Date of filing: 30.09.1997
(51) Int. Cl.: B01D 63/02, B01D 61/18, C02F 1/44, B01D 69/08

(54) **WATER FILTRATION DEVICE**
WASSERFILTRIERGERÄT
DISPOSITIF DE FILTRATION D'EAU

(30) Priority: 07.10.1996 NL 1004210
(43) Date of publication of application: 01.09.1999
(73) Proprietor: Prime Water Systems GmbH, 48455 Bad Bentheim (DE)
(72) Inventor: SCHARSTUHL, Johan, Jan, NL-7495 TC Ambt Delden (NL)
(74) Representative: Kupecz, Arpad
(86) International application number: PCT/NL1997/000544
(87) International publication number: WO 1998/015342

(56) References cited:
- EP-A- 0 036 315
- EP-A- 0 207 379
- EP-A- 0 261 734
- EP-A- 0 305 787
- EP-A- 0 395 133
- EP-A- 0 645 174
- EP-A- 0 673 672
- GB-A- 2 135 902
- GB-A- 2 246 771
- US-A- 4 276 249
- US-A- 4 980 056
- PATENT ABSTRACTS OF JAPAN vol. 018, no. 001 (C-1148), 6 January 1994 & JP 05 245350 A (ASAHI CHEM IND CO LTD), 24 September 1993, -& DATABASE WPI Section Ch, Week 9343 Derwent Publications Ltd., London, GB; Class A88, AN 93-339041 XP002054199
- PATENT ABSTRACTS OF JAPAN vol. 017, no. 506 (C-1110), 13 September 1993 & JP 05 137972 A (NITTO DENKO CORP), 1 June 1993, -& DATABASE WPI Section Ch, Week 9326 Derwent Publications Ltd., London, GB; Class D15, AN 93-211459 XP002054200
- PATENT ABSTRACTS OF JAPAN vol. 013, no. 111 (C-577), 16 March 1989 -& JP 63 287593 A (TORAY IND INC), 24 November 1988, -& DATABASE WPI Section Ch, Week 8920 Derwent Publications Ltd., London, GB; Class D15, AN 89-148595 XP002054201 -& CHEMICAL ABSTRACTS, vol. 111, no. 2, 10 July 1989 Columbus, Ohio, US; abstract no. 12300, XP002054198
- PATENT ABSTRACTS OF JAPAN vol. 018, no. 357 (C-1221) 06 July 1994 & JP 06 091 256 A (MITSUBISHI RAYON CO LTD) 05 April 1994
- MULDER M.: "Basic principles of Membrane Technology", 1990, KLUWER, DORDRECHT, NL

## Description

A water filtration device for the local sterilisation of domestic and/or drinking water, comprising a filter housing provided with an inlet and outlet connection and provided in said filter housing a bundle of capillary membranes, a first end of said capillary membranes being open and another end being closed, and said capillary membranes being at the first end cased in a membrane holder closing off the space between the capillary membranes and the filter housing, the membranes are micro or ultrafiltration membranes and have an asymmetric pore structure in that the pore diameter decreases from the outside to the inside across the membrane wall, that is the larger pores are located on the outside surface of the capillary membranes.

Devices for the purification of liquids, and more specifically for the purification of drinking water and for the removal of live microorganisms from said drinking water, are known in the art. Generally the installations in use for the purification of drinking water are large to serve an extensive area. Often outdated techniques or antiquated installations are employed so that it is not easy to realize an adequate purification of the drinking water. It is also possible that later on pathogens or other kinds of contamination appear in the initially purified water. In many cases chlorine is added to the drinking water to prevent the occurrence of health-threatening pathogens. This has the major disadvantage that the taste and smell of the water deteriorate very considerably. Moreover, a number of microorganisms, like *Cryptosporidium* and *Giardia,* are resistant to chlorine and survive in chlorinated drinking water. It is also problematic that in many areas, especially in developing countries, no reliable drinking water supply exists at all.

Local (point of use) sterilization of water by means of capillary membranes fitted in a housing is known from GB 2 135 902. A disadvantage of these devices is, that on the one hand the capacity expressed in litres filtered liquid per unit area of membrane surface and per time unit is low, and that on the other hand a high pressure drop over the filtration device is required in order to obtain filtering action.

JP 5245350 A discloses a high efficiency precision hollow fiber filter membrane for the separation of micro-organisms.

JP 63287593A relates to a straw type water purification module tube, which is provided with a hollow fiber membrane, whereas GB 2.246.771A discloses a water purifier device, which is provided with a separation/filtration membrane and active carbon.

Furthermore EP 0.645.174 discloses a method for the removal of components causing turbidity, from a fluid, by means of micro-filtration.

The water filtration device according to the invention intends to eliminate said disadvantages. To this end the water filtration device according to the invention is provided with capillary membranes which are permanently hydrophylic and have a pore diameter of about 1 µm on the outside surface and a pore diameter of 0,01-0,3 µm on the inside surface.

As a consequence of the asymmetric pore structure with the permanently hydrophylic properties and the defined pore diameter in combination of the membranes, the flow resistance through the membrane is considerably reduced, thus increasing the capacity. Further, the asymmetric structure delays contamination of the membranes and allows easy cleaning of the device in order to be reused. Cleaning takes place by inverting the flow direction whereby contamination is easily removed from the asymmetric pores. Particles and molecules larger than the pore diameter of the water filtration membranes, are effectively filtered out of the liquid to be purified.

The effectiveness and applicability of the water filtration device is further improved if the membranes are manufactured from a polyether sulphone/polyvinyl pyrrolidone polymer (PES/PVP polymer). Hereby permanently hydrophilic membranes are obtained which, in combination with the asymmetric structure, results in a low differential pressure which is required over the membrane while resulting in a high filtration/permeate yield, that is a high capacity is realized at a low operational pressure. The water filtration device according to the invention may now be applied at operational pressures ranging from 0.5 to 4 bars while in a simple manner realizing a capacity larger than 1000 litres/m²/h/bar. This makes the water filtration device particularly suitable for utilization in or at a water outlet such as the effluent pipe of a mixing tap, or at any other location in the domestic water supply system.

Further, by using PES/PVP polymer in the manufacture, a very consistent pore structure is obtained, meaning there is little variation in the selected pore diameter. When manufacturing the membranes, the pore diameter can be adjusted so that capillary membranes with a predetermined pore diameter can be produced. Due to the very consistent pore structure the distribution of the pore diameters will differ little from the selected diameter, making the capillary membrane extremely effective for the intended application. For instance, if a very small pore diameter is selected for the purpose of forming an absolute barrier against bacteria and viruses, there will be no large pore diameters present which would cancel the effect of this barrier. A typical log removal value for the microorganisms is above 8.

Another advantage of manufacturing the membrane from a PES/PVP polymer is that said polymer possesses a very high mechanical, chemical and thermal resistance. The membrane may be disinfected by means of hot water or steam, for instance, in an autoclave. This is a manner to eliminate pathogens that are possibly left behind in the membrane after cleaning by inversion of the liquid flow through the membrane.

Depending on the intended application, the pore diameter at the side of the asymmetric pore structure having the smallest diameter is chosen between 0.01 and 0.3 µm. By choosing the pore diameter in this range an effective filtration is obtained, while the variation around the selected pore diameter will be much smaller than said range. Selecting a pore diameter at the lower limit of this range (0.01 µm), especially when used for medical purposes, results in an absolute barrier against bacteria and viruses. In addition, bacterial degradation products such as pyrogens and endotoxins are filtered out exceptionally effectively when the value of the pore diameter is very close to 0.01 µm. With the increase in diameter the capacity will increase, however, this will allow the particles having a diameter smaller than the selected pore diameter to pass through the membranes. The choice of pore diameter will depend on the intended application. Above 0.3 µm the effectiveness of the filter diminishes. At this value of 0.3 µm the smallest bacterium, namely *Pseudomonas diminuta*, taken as a standard by the Food and Drug Administration (FDA) in the United States, is still filtered out.

In a preferred embodiment the filter housing of the water filtration device according to the invention is made from a plastic that is resistant to temperatures above 100°C. The water filtration device can now be used at a temperature above 100°C, allowing the device to be heated for, among other purposes, sterilization.

The plastic for the manufacture of the filter housing is preferably polysulphone. Said plastic is resistant to a temperature of above 150°C and the filter housing may be manufactured from said plastic in a simple manner.

In an advantageous embodiment of the water filtration device, at least two baffles are provided at the inlet connection of the filter housing, said baffles being mounted obliquely with respect to the flow direction of the liquid to be filtered. This induces a constant turbulence of the incoming water, preventing the formation of large air bubbles which would obstruct the membranes. Hereby the filtration properties of the device are further improved.

A preferred method for the manufacture of a water filtration device according to the invention, wherein said device is provided with capillary membranes having a first end and a second end, is characterized, in that at the second end the capillary membranes are closed by means of heat sealing. By this method the capillary membranes can be closed in a simple, quick and reliable manner. This method of closing has also the advantage that no other materials need to be introduced into the capillary membranes, which other materials might impair the characteristics of the water filtration device.

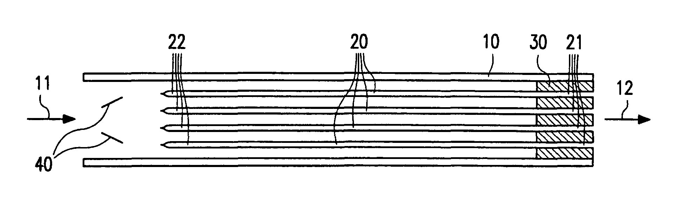

In the following the invention will be further explained with reference to the drawing, in which the only figure shows a preferred embodiment of the water filtration device according to the invention.

In the figure the filter housing is indicated by reference number 10. The filter housing 10 is provided with an inlet connection 11 and an outlet connection 12. In the filter housing 10 a bundle of capillary filtration membranes 20 is provided, being at the first end 21 cased in a membrane holder 30. At this first end 21 the capillary membranes are open and at the other end 22 the capillary membranes are closed. The filter housing 10 may be made from a rigid material, such as polysulphone, P.V.C., or a metal, but it may also be made from a flexible material. In the latter case the water filtration device may be applied in a bent condition. In the embodiment shown, the filter housing 10 comprises a tubular element.

In the preferred embodiment shown, the membranes 20 are at the first end 21 embedded in a resin, such as epoxy or polyurethane, serving as membrane holder 30. At the other end 22 the capillary membranes 20 are closed by heat sealing, that is pinching and simultaneous heating. This constitutes an effective and reliable manner of closing the membranes. It is also possible to close each capillary membrane 20 individually by means of a resin plug. Analogous with the first end 21, the capillary membranes 20 may at the second end also be embedded in a resin; at this second end 22 the capillary membranes 20 will, however, be closed by means of the resin.

At the inlet connection 11, two obliquely placed baffles 40 are provided in the filter housing 10. This will induce a constant turbulence in the liquid flow to be filtered, preventing any clustering of air in the liquid flow. The membranes cannot now become obstructed by air bubbles, so that the filter works more effectively.

The pores of the capillary membranes 20 have an asymmetric structure, wherein the larger pores are located at the outside of the capillary membranes of the embodiment shown. With the approach flow at the outside of the capillary membranes, the resistance is lower, realizing a higher flow rate at an equal number of capillary membranes.

It has been shown that due to the asymmetric structure in combination with permanently hydrophylic properties and defined pore diameter of the membranes the filtration properties are considerably better than when a membrane having a symmetric pore structure is used. For instance, the flow resistance is considerably lower. Thanks in part to this asymmetric structure and the permanently hydrophilic properties of the membrane material - preferably a polyether sulphone/polyvinyl pyrrolidone polymer (PES/PVP polymer) - the membranes are not easily clogged with contamination so that a high capacity can be realized at a lower operational pressure, especially, more than 1000 litres/m²/h/bar. After the capillary membranes have been in use for a period of time, they can be cleaned extremely well thanks to the asymmetric structure of the pores, by inverting the flow direction, after which they may be reused.

In the embodiment shown, the pores have a diameter of about 1 µm at the outside of the capillary membranes 20 and at the inside a diameter between 0.01 and 0.3 µm, depending on the application. Particles sized above this selected diameter range, the variation around the selected value being much smaller than said range, will thereby very effectively be filtered out of the drinking water to be purified. In addition, the membranes may be employed very well at temperatures of 0-120°C.

The water filtration device is preferably employed in or at a water outlet such as a mixing tap. Generally, such a tap supplies 10 litres water per minute, requiring a membrane surface of about 0.1 m². This membrane surface is realized by using a bundle of about 150 capillary membranes having an outside diameter of about 1.2 mm, an inside diameter of about 0.8 mm and a pore size of 0.1 µm at the side of the asymmetric structure having the smallest diameter, which will be used mostly when there is a slight chance of viruses in the water to be purified. In practice the number of membranes may vary from 100 to 200 and, depending on the number of membranes used, the length of said membranes should be between 30 and 15 cm. It has been shown that the capacity of the total device, depending on the dimensions of the filter housing, exhibits a maximum value for a specific number of membranes.

The water purified by means of the shown water filtration device, is purged from contaminations and pathogens such as bacteria and viruses. The result is reliable drinking water from which, in combination with carbon adsorption, possible unpleasant smell and taste caused by the addition to the drinking water of chlorine and other solutes may be further removed. The water filtration device has a long service life and can be cleaned and reused. The water filtration device according to the invention can, when used in a water tap, be incorporated in a component of the tap but it is also quite feasible to connect the water filtration device to the water tap by means of, for instance, a threaded or bayonet connection whereby the water filtration device serves also as effluent pipe. It is also possible to incorporate the water filtration device in a water supply mains for a building, such as a house. Obviously, the dimensions of the water filtration device must then be adapted.

## Claims

1. A water filtration device for the local sterilisation of domestic and/or drinking water, comprising a filter housing (10) provided with an inlet (11) and outlet (12) connection and provided in said filter housing (10) a bundle of capillary membranes (20), a first end (21) of said capillary membranes being open and another end (22) being closed, and said capillary membranes being at the first end (21) cased in a membrane holder(30) closing off the space between the capillary membranes (20) and the filter housing (10), the membranes (20) are micro or ultrafiltration membranes and have an asymmetric pore structure in that the pore diameter decreases from the outside to the inside across the membrane wall, that is the larger pores are located on the outside surface of the capillary membranes, and wherein said capillary membranes (20) are permanently hydrophylic and have a pore diameter of about 1 µm on the outside surface and a pore diameter of 0,01 - 0,3 µm on the inside surface.

2. A water filtration device according to claim 1, **characterized in that** the membranes (20) are manufactured from a polyether sulphone/polyvinyl pyrrolidone polymer.

3. A water filtration device according to claim 1 or 3, **characterized in that** the filter housing (10) is made from a plastic that is resistant to temperatures above 100°C.

4. A water filtration device according to claim 3, **characterized in that** the plastic for the manufacture of the filter housing (10) is polysulphone.

5. A water filtration device according to any one of the preceding claims, **characterized in that** at least two baffles (40) are provided at the inlet connection (11) of the filter housing (10), said baffles (40) being mounted obliquely with respect to the flow direction of the liquid to be filtered.

## Patentansprüche

1. Wasserfiltriervorrichtung für die örtliche Sterilisierung von Haus- und/oder Trinkwasser mit:
einem Filtergehäuse (10), welches einen Einlassanschluss (11) und einen Auslassanschluss (12) aufweist und wobei in dem Filtergehäuse (10) ein Bündel von Kapillarmembranen (20) vorgesehen ist, wobei ein erstes Ende (21) der Kapillarmembrane offen und ein anderes Ende (22) geschlossen ist, und wobei die Kapillarmembrane an dem ersten Ende (21) von einem Membranhalter (30) ummantelt sind, wodurch der Abstand zwischen den Kapillarmembranen (20) und dem Filtergehäuse (10) geschlossen wird, wobei die Membrane (20) Mikro- oder Ultrafiltriermembrane sind und eine asymmetrische Porenstruktur derart aufweisen, dass sich der Porendurchmesser von der Außenseite zur Innenseite hin entlang der Membranwand verkleinert, wobei die größeren Poren an der äußeren Fläche der Kapillarmembrane angeordnet sind, und wobei die Kapillarmembrane (20) fortwährend hydrophylisch sind und einen Porendurchmesser von ungefähr 1 µm an der äußeren Fläche und einem Porendurchmesser von 0,01 - 0,3 µm auf der inneren Fläche besitzen.

2. Wasserfiltriervorrichtung nach Anspruch 1, **dadurch gekennzeichnet, dass** die Membrane (20) aus einem Polyether-Sulfon-/Polyvinyl-Pyrrolidon-Polymer bestehen.

3. Wasserfiltriervorrichtung nach Anspruch 1 oder 2, **dadurch gekennzeichnet, dass** das Filtergehäuse (10) aus einem Plastik besteht, welches widerstandsfähig gegenüber Temperaturen von über 100 °C ist.

4. Wasserfiltriervorrichtung nach Anspruch 3, **dadurch gekennzeichnet, dass** das Plastik für die Herstellung des Filtergehäuses (10) Polysulfon ist.

5. Wasserfiltriervorrichtung nach wenigstens einem der vorhergehenden Ansprüche, **dadurch gekennzeichnet, dass** mindestens zwei Ablenkeinrichtungen (40) an dem Einlassanschluss (11) des Filtergehäuses (10) vorgesehen sind, wobei die Ablenkeinrichtungen (40) bezüglich der Flussrichtung der zu filternden Flüssigkeit schräg angeordnet sind.

## Revendications

1. Un dispositif de filtration d'eau pour la stérilisation locale d'eau domestique et/ou potable, comprenant un boîtier de filtre (10), muni d'une connexion d'entrée (11) et une connexion de sortie (12) et muni, dans ledit boîtier de filtre (10), d'un faisceau de membranes (20) capillaires, une première extrémité (21) desdites membranes capillaires étant ouverte et une autre extrémité (22) étant fermée, et lesdites membranes capillaires étant, à la première extrémité (21), emboîtées dans un support de membranes (30), fermant l'espace existant entre les membranes capillaires (20) et le boîtier de filtre (10), les membranes (20) étant des membranes à micro- ou ultra-filtration et ayant une structure à pores asymétriques, avec un diamètre de pores diminuant de l'extérieur vers l'intérieur, dans la paroi de membrane, c'est-à-dire que les pores les plus gros sont placés sur la surface extérieure des membranes capillaires, et dans lequel lesdits membranes capillaires (20) sont dotées de caractéristiques hydrophiles permanentes et ont un diamètre de pore d'environ 1 µm sur la surface extérieure et un diamètre de pore de 0,01 à 0,3 µm sur la surface intérieure.

2. Un dispositif de filtration d'eau selon la revendication 1, **caractérisé en ce que** les membranes (20) sont fabriquées à partir d'un polymère sulfone de polyéther/polyvinyl pyrrolidone.

3. Un dispositif de filtration d'eau selon la revendication 1 ou 3, **caractérisé en ce que** le boîtier de filtre (10) est réalisé en une matière synthétique résistante à des températures supérieures à 100 °C.

4. Un dispositif de filtration d'eau selon la revendication 3, **caractérisé en ce que** la matière plastique prévue pour la fabrication du boîtier de filtre (10) est du polysulfone.

5. Un dispositif de filtration d'eau selon l'une quelconque des revendications précédentes, **caractérisé en ce qu'**au moins deux déflecteurs (40) sont prévus sur la connexion d'entrée (11) du boîtier de filtre (10), lesdits déflecteurs (40) étant montés obliquement par rapport à la direction d'écoulement du liquide à filtrer
